# EUROPÄISCHE PATENTSCHRIFT

(11) **EP 2 106 376 B1**
(45) Veröffentlichungstag und Bekanntmachung des Hinweises auf die Patenterteilung: **11.07.2012**
(21) Anmeldenummer: 07856360.8
(22) Anmeldetag: 04.12.2007
(51) Int. Cl.: B65G 47/26, B65G 15/22

(54) **INTELLIGENTE STAUFÖRDERBAHN**
INTELLIGENT ACCUMULATING CONVEYOR
PISTE INTELLIGENTE DE TRANSPORT ET DE RETENUE

(30) Priorität: 05.12.2006 DE 102006058893
(43) Veröffentlichungstag der Anmeldung: 07.10.2009
(73) Patentinhaber: SSI Schäfer Peem GmbH, 8051 Graz (AT)
(72) Erfinder: SCHÄFER, Gerhard, 57290 Neunkirchen (DE)
(74) Vertreter: Witte, Weller & Partner
(86) Internationale Anmeldenummer: PCT/EP2007/010519
(87) Internationale Veröffentlichungsnummer: WO 2008/067989

(56) Entgegenhaltungen:
- DE-A1- 3 738 587
- US-A- 5 505 291
- US-A1- 2004 112 713

## Beschreibung

Die vorliegende Erfindung betrifft eine (intelligente) Stauförderbahn und ein Verfahren zum Betreiben derselben, um mehrere Fördergüter auf ein und demselben Förderbahnsegment stauen zu können.

Unter dem Begriff "Fördertechnik" werden nachfolgend alle technischen und organisatorischen Einrichtungen zum Bewegen oder Transportieren von Gütern auf (meist kurzen) Förderbahnen bzw. -strecken verstanden werden. Es gibt unterschiedlichste Typen von Fördertechniken, wie z.B. Gurtförderer, Rollenförderer, Schaukelförderer, Schleppkettenförderer und ähnliches. Die nachfolgend beschriebene Erfindung ist auf keinen spezifischen Fördertechniktyp beschränkt.

Stauförderbahnen werden verwendet, um Fördergüter zu puffern oder zu stauen. Ein Fördergüterverkehr wird dabei angehalten bzw. unterbrochen. Typische Anwendungsfälle für Stauförderbahnen sind: das Zusammenführen oder Kreuzen von mehreren Förderstrecken, da dort zur Vermeidung von Zusammenstößen oder aufgrund von Vorzugsregelungen auf einer oder mehrerer Zuführungsstrecken der Fördergüterverkehr gestaut werden muss; das Stauen vor einer langsameren Stelle, wie z.B. einer langsameren Station oder einer Transfereinheit (z.B. einem seitlichen Ausschieber); oder das Bilden von Zügen, wenn z.B. Fördergüter mit einem gemeinsamen Ziel auf einer Staustrecke gesammelt werden. Diese Aufzählung ist nicht vollständig, sondern dient lediglich einer Veranschaulichung der Bedeutung und Breite der Anwendung von Stauförderbahnen. Eine Stauförderbahn ist herkömmlicherweise ein einzelner, kurzer Förderer, dessen Länge geringfügig größer als die Länge eines zu stauenden Fördergutes ist. Sie stellt einen Stauplatz für ein einziges Fördergut dar. Eine Stauförderstrecke besteht aus mehreren, unabhängig schaltbaren Staufördersegmenten.

Eine Stauförderbahn gemäß dem Stand der Technik ist in der europäischen Patentanmeldung EP 0 959 028 A2 beschrieben. Eine weitere Stauförderbahn ist in der JP 07-206 132 AA offenbart.

Bei einer solchen Stauförderbahn werden die Fördergüter in einem Staubereich mit einem Abstand voneinander angehalten. Ein vorderstes Fördergut wird nach einer vorgegebenen Zeit weiter transportiert. Danach wird ein nachfolgendes Fördergut mit einem Abstand weiter transportiert.

Allgemein wird bei Förderanlagen ein möglichst hoher Durchsatz von Fördergütern pro Zeiteinheit gefordert. Insbesondere bei Förderanlagen mit Staubereichen kommt es beim Weitertransport des Förderguts darauf an, den lichten Abstand zwischen weiter transportierten Fördergütern, also den Abstand zwischen einer Hinterkante eines jeweils vorderen Förderguts und einer Vorderkante des nachfolgenden Förderguts, möglichst gering zu halten, um einen möglichst großen Durchsatz zu erreichen. Im Stand der Technik wird pro Stauplatz lediglich ein Fördergut, wie z.B. ein Behälter, gestoppt und gestaut. Dies bedeutet im Umkehrschluss, dass eine Vielzahl von Stauplätzen, inklusive zugehörigen Steuerungen, Sensoren und Aktuatoren, eingesetzt werden muss, um eine entsprechende Vielzahl von Fördergütern, stauen zu können. Mit einem dem Stauplatz zugeordneten Sensor wird üblicherweise erkannt, ob ein Fördergut auf den zugehörigen Stauplatz einfährt. Der Sensor kann des weiteren zur Stauerkennung und zur Positionserkennung eingesetzt werden. Liefert der Sensor beim Durchgang bzw. während der Passage eines Förderguts ein Signal, so kann die Position des Förderguts relativ zur Förderstrecke ermittelt werden.

Das Dokument US 2004/0112713 A1 mit dem Titel "ACCUMULATING CONVEYOR SYSTEM" offenbart ein Staufördersystem sowie ein Verfahren zum Stauen von Artikeln. Die Stauvorrichtung ist angepasst, eine Vielzahl von Artikeln als Artikelverband aufzustauen. Artikelverbände werden auf eine Transportstrecke ausgeschleust, die die Verbände transportiert und die Verbände staut, sollte es erforderlich sein. Die Stauanordnung besteht aus einem verbandbildenden Abschnitt, der Verbandbereiche bildet und in Verbände ausschleust. Die Stauanordnung staut Artikel in Zonen und verringert Abstände zwischen aufgereihten Artikeln an stromaufwärts gelegenen Abständen hin zu stromabwärts gelegenen Abständen.

Das Dokument US 5,505,291 A mit dem Titel "PACKAGE MEASURING SYSTEM AND ACCUMULATOR" offenbart eine Vorrichtung, die ein Vermessen und Stauen von Stückgütern zwecks einer stromabwärts gelegenen Sortierung oder Stapelung ermöglicht. Diese Vorrichtung umfasst eine Stückgutzuführung mit variabler Kraft, um ein chaotisches Stauen zu vermeiden. Eine Umkehrung der Förderer ermöglicht eine verringerte Streckenkompression der Stückgüter, um diese einfacher entfernen zu können. Außerdem wird ein Ultraschallmessbogen vorgesehen.

Es ist eine Aufgabe der vorliegenden Erfindung ein Staufördersegment vorzusehen, das in der Lage ist, gezielt mehrere Fördergüter zu stauen und insbesondere die gestauten Fördergüter gezielt in einen Fördergüterverkehr wieder einzugliedern.

Ferner ist es eine Aufgabe der vorliegenden Erfindung, ein Verfahren bereitzustellen mit dem mehrere Fördergüter auf ein und demselben Förderbahnsegment gestaut werden können.

Diese Aufgabe wird mit einer Stanfördustrecke gemäß Anspruch 1 gelöst.

Der Sensor dient also zum einen zum Bestimmen eines Zustands, bei dem ein Fördergut auf das Segment eingefahren wird. Zum anderen kann der Sensor zur Bestimmung der geometrischen Länge eines Förderguts dienen, das auf das Segment eingefahren wird. Ausgehend von der Geschwindigkeit, mit der das Segment bzw. dessen Fördermittel üblicherweise betrieben wird und von z.B. der zeitlichen Dauer des Erfassungssignals des Sensors, kann die Länge des einzufahrenden Förderguts ermittelt werden. Insbesondere verfügt das Segment insbesondere über eine Steuereinheit, die angepasst ist, die Länge von bereits auf dem Segment aufgenommenen Fördergütern aus diesen Daten zu bestimmen.

Somit können mehrere Fördergüter auf ein und demselben Stausegment angehalten werden, wodurch sich die Anzahl der in einer Förderstrecke erforderlichen Stausegmente erheblich reduziert. Auch der Steuerungsaufwand wird geringer, da weniger Stausegmente koordiniert werden müssen, um viele Fördergüter zu stauen.

Ein Vorteil der Erfindung ist, dass mehrere Fördergüter auf dem gleichen Segment gestaut werden können, ohne dass eine separate Sensorik, eine weitere Antriebstechnik oder weitere Aktuatoren (pro Stauplatz) benötigt werden.

Gemäß einer bevorzugten Ausführungsform kann das Stromabwärts gelegene Fördermittel keine weiteren Fördergüter aufnehmen, wenn der auf dem Fördermittel noch zur Verfügung stehende Platz kleiner als eine maximale Fördergutlänge ist.

Die Steuereinheit des erfindungsgemäßen Segments kann den auf dem Fördermittel noch "freien" Platz anhand der Sensorsignale berechnen, indem z.B. in einem ersten Schritt die Längen der auf dem Segment aufgestauten Fördergüter berechnet und in einem zweiten Schritt aufsummiert wird, um so durch Differenzbildung den noch freien Platz zu bestimmen. Ist insbesondere eine maximale Fördergänge bekannt, so kann auf einfache Weise bestimmt werden, ob das Segment auch noch ein Fördergut maximaler Länge aufnehmen könnte.

Alternativ könnte eine Sensorinformation eines stromaufwärts gelegenen weiteren Segments benutzt werden, um die Länge eines zu erwartenden Förderguts zu bestimmen. In Kenntnis der Länge des zu erwartenden Förderguts könnte die Steuereinheit des interessierenden Segments bestimmen, ob der freie Platz ausreicht, um das zu erwartende Fördergut aufzunehmen.

Ein weiterer Vorteil der Erfindung ist darin zu sehen, dass mehrere Fördergüter mit engstem Abstand zueinander gestaut werden. Waren im Stand der Technik z.B. vier separate Stauplätze erforderlich, um vier Fördergüter zu stauen, so können gemäß der vorliegenden Erfindung - je nach Länge des Segments - nun z.B. bis zu vier Fördergüter gleichzeitig auf ein und demselben Segment gestaut werden, wobei der lichte Abstand zwischen den einzelnen Fördergütern bedeutend kleiner ist als der Abstand zwischen den vier Stausegmenten gemäß dem Stand der Technik. Diese Maßnahme erhöht also den Durchsatz von Fördergütern pro Zeiteinheit.

Gemäß einer weiteren Ausführungsform umfasst die Steuereinheit eine Speichereinheit, in der die Bewegungsgeschwindigkeit des Fördermittels und die Länge des Segments hinterlegt sind.

Diese Daten können benutzt werden, um die entsprechenden Berechnungen beim Stauen durchzuführen.

Gleiches gilt für eine maximale Fördergutlänge, die ebenfalls in der Speichereinheit hinterlegt sein kann.

Außerdem ist es bevorzugt, wenn unterschiedliche Typen von Fördergütern, die also unterschiedliche Abmessungen aufweisen, gestaut werden können.

Mit Hilfe des Sensorsignals wird die Länge der Fördergüter jeweils individuell bestimmt, so dass es nicht erforderlich ist, dass die Steuereinheit vorab Kenntnis von den Abmessungen der zu erwartenden Fördergütern hat, um entsprechende Berechnungen durchführen zu können.

Oftmals verrutschen Fördergüter auch auf der Förderstrecke, so dass sie z.B. schräg zur Längsachse der Förderstrecke stehen. Ausgehend von beispielsweise einem rechteckigen Grundriss würde sich so die effektive Länge des Förderguts vergrößern. Würde die Steuereinheit basierend auf vorgegebenen Abmessungen kalkulieren, könnte es zu Störungen kommen. Da die Steuereinheit jedoch die tatsächliche Länge (in Förderrichtung) misst, können Fördergüter auch abweichend von einer Idealpositionierung transportiert werden.

Vorzugsweise werden die unterschiedlichen Abmessungen (hinsichtlich einer Idealpositionierung) ebenfalls in der Speichereinheit abgelegt.

Wie bereits zuvor erwähnt, kann die geometrische Länge eines Förderguts durch Messen der Zeitdauer des Erfassungssignals des Sensors bestimmt werden.

Ist der Sensor beispielsweise als Lichtschranke implementiert, so kann die Dauer des Unterbrechungssignals gemessen werden, das hervorgerufen wird, wenn ein Fördergut den Lichtstrahl beim Passieren unterbricht.

Gemäß einer weiteren Ausführungsform ist der Sensor in einem Bereich eines stromaufwärts gelegenen Endes des Fördermittels, d.h. am Beginn des Segments, angeordnet.

Auf diese Weise kann erkannt werden, wann ein einfahrendes Fördergut in den Bereich des Segments eintrifft.

Dabei ist es von Vorteil, wenn der Sensor von außen, vorzugsweise unmittelbar, an das stromaufwärts gelegene Ende des Segments angrenzt.

So kann der Zeitpunkt erfasst werden, zu dem ein Fördergut auf das Segment eingefahren werden soll. Insbesondere, wenn Gurtförderer in Kombination mit einem Lichttaster eingesetzt werden, muss dem Lichttaster die Möglichkeit gegeben sein, einen Lichtstrahl auszusenden, der dann wiederum von einem passierenden Fördergut reflektiert werden muss, um die Passage des Förderguts überhaupt erfassen zu können.

Außerdem wird es bevorzugt, wenn ein weiterer Sensor in einem Bereich stromaufwärts zu dem Segment angeordnet ist, wobei der Bereich vorzugsweise um eine Segmentlänge entfernt liegt.

Dieser vorgelagerte Sensor kann benutzt werden, um die Länge eines Förderguts, das ebenfalls auf das Stausegment einfahren soll, mit ausreichendem zeitlichen Vorlauf zu bestimmen. Liegt die Information über die Länge des Förderguts ausreichend früh vor, so ist es ein Einfaches für die Steuereinheit, zu bestimmen, ob das zu erwartende Fördergut noch auf den freien Platz gefahren werden kann oder nicht. Es gibt jedoch auch alternative Verfahren, um die Länge des Förderguts zu bestimmen. So könnten beispielsweise Videokameras eingesetzt werden, die ein Bild der Förderstrecke von oben aufnehmen, um anschließend unter Verwendung einer geeigneten Software so erzeigte Daten hinsichtlich der Fördergutlänge auszuwerten.

Gemäß einer weiteren vorteilhaften Ausgestaltung umfasst die Steuereinheit eine Berechnungseinheit, die die Längen aller auf das Segment bereits eingefahrenen Fördergüter und einen vorbestimmten Mindestabstand aufsummiert, um zu bestimmen, ob das Segment weitere Fördergüter aufnehmen kann.

Bei der hier beschriebenen Ausführungsform handelt es sich um die bereits weiter oben beschriebene zweite Alternative, mit der bestimmt werden kann, ob weitere Fördergüter aufgenommen werden können.

Mit den Stausegmenten gemäß der vorliegenden Erfindung kann auch eine Förderstrecke zusammengebaut werden, die dann mehrere dieser Stausegmente aufweist.

Die oben genannte Aufgabe wird ferner durch ein Verfahren gemäß Anspruch 13 gelöst.

Insbesondere wird beim Entscheiden berücksichtigt, welche Länge das erste Segment selbst in der Förderrichtung aufweist und mit welcher Geschwindigkeit das Fördermittel des ersten Segments bewegt wird. Außerdem kann des weiteren eine maximale Fördergutlänge oder eine Länge eines als Nächstes einfahrenden Förderguts berücksichtigt werden.

Basierend auf diesen Informationen kann die Steuereinheit berechnen, ob der auf dem Segment noch zur Verfügung stehende "freie" Platz ausreicht, um das nächste Fördergut aufzunehmen. Da die Länge des Stausegments üblicherweise länger als die Länge eines Förderguts ausgelegt ist, können so mehrere Fördergüter auf ein und demselben Stausegment gestaut werden.

Außerdem ist es von Vorteil, wenn keine weiteren Fördergüter eingefahren werden, wenn eine Differenz aus der Länge des ersten Segments selbst und aus einer Summe aller bestimmten Längen der eingefahrenen Fördergüter unterhalb einer Grenzlänge, insbesondere unterhalb einer maximalen Fördergutlänge, liegt. Durch die erwähnte Grenzlänge ist es außerdem möglich, auf einzelnen Segmenten eine unterschiedliche Anzahl von gleichen Fördergütern zu stauen (z.B. 3 Fördergüter auf Segment N, 2 Fördergüter auf Segment N-1, bei gleichbleibendem Förderguttyp).

Es sei erwähnt, dass die Längen der Fördergüter sowie die Längen der Segmente unterschiedlich sein können. Die Grenzlänge kann von der Länge des Segments abhängen.

Ferner ist es bevorzugt, wenn die Länge von einfahrenden Fördergütern basierend auf einer zeitlichen Dauer eines Sensorsignals bestimmt wird, welches ein Einfahren eines Förderguts repräsentiert.

Wie oben erwähnt, kann die Länge jedoch auch anders bestimmt werden.

Gemäß einer weiteren vorteilhaften Ausgestaltung wird das Fördermittel jeweils gestoppt, wenn ein Fördergut eingefahren ist, und anschließend wieder angetrieben, wenn weiteres Fördergut eingefahren werden soll und entschieden wurde, dass weiteres Fördergut aufgenommen werden kann.

Durch dieses schrittweise Betätigen des Fördermittels, wie z.B. eines umlaufenden Bands eines Gurtförderers, können mehrere Fördergüter in einem sehr engen Abstand hintereinander auf dem Stausegment gestaut werden. Dadurch verringert sich der lichte Abstand zwischen den Fördergütern, wodurch sich der Durchsatz pro Zeiteinheit erhöhen lässt. Durch einstellbare Nachlaufzeiten lassen sich definierte Lücken zwischen den Fördergütern erzielen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: zeigt eine schematische Draufsicht auf eine Stauförderbahn, die aus mehreren Stausegmenten gemäß der vorliegenden Erfindung aufgebaut ist.
- Fig. 2A-2G: zeigen einen Stauvorgang in zeitlicher sequentieller Abfolge.
- Fig. 3: zeigt Signal-Zeit-Diagramme, die beim Betreiben des erfindungsgemäßen Verfahrens von Relevanz sind.

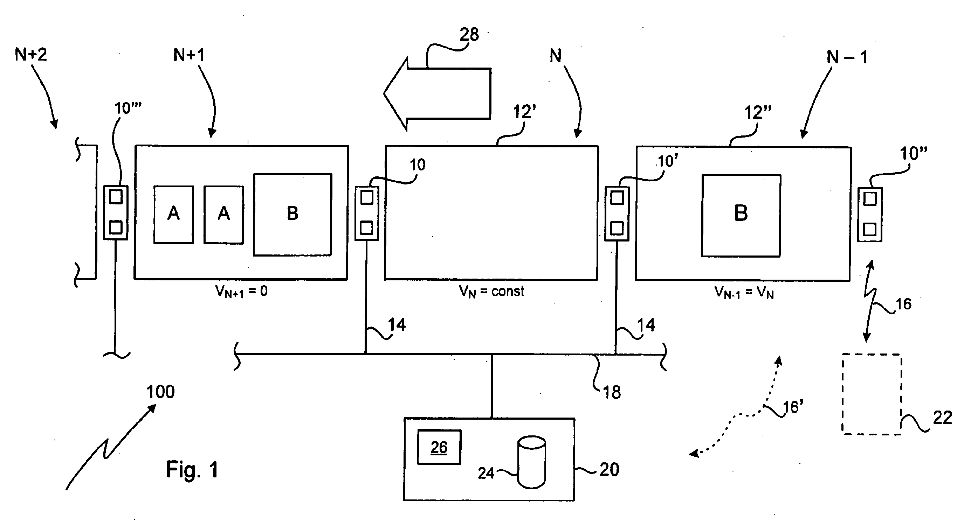

Fig. 1 zeigt eine Draufsicht auf eine Stauförderbahn 100, wobei exemplarisch drei Stausegmente N+1, N, N-1 in Form von endlos umlaufenden Gurtförderern gezeigt sind. Es versteht sich, dass die Stauförderbahn aus mehr oder weniger Stausegmenten gebildet werden kann. Ferner versteht es sich, dass der Einsatz eines Gurtförderers als Stausegment lediglich exemplarisch ist. Es könnten z.B. auch riemenangetriebene Rollensegmente eingesetzt werden.

Jedes Stausegment umfasst einen zugeordneten Sensor 10, 10', 10" und ein Fördermittel 12, 12',12". Die Sensoren 10 sind vorzugsweise über Leitungen 14 und beispielsweise einen Datenbus 18 mit mindestens einer Steuereinheit 20, wie z.B. einer SPS (speicherprogrammierbare Steuerung), verbunden. Es versteht sich, dass jedes Segment mit einer eigenen Steuereinheit 20 verbunden sein könnte, wie es exemplarisch für das Segment N-1 angedeutet ist, dessen Sensor 10" über eine drahtlose Verbindung 16 mit einer Steuereinheit 22 verbunden ist. Alternativ teilen sich mehrere Segmente eine einzige Steuereinheit. Die Steuereinheit 22 ist in der Fig. 1 mit einer gestrichelten Linie veranschaulicht, um zu verdeutlichen, dass das Segment N-1 auch mit der Steuereinheit 20 - entweder ebenfalls über den Bus 18 oder eine Drahtlosverbindung 16' - verbunden sein könnte.

Jede der Steuereinheiten 20 umfasst vorzugsweise eine Speichereinheit 24 und einen Mikrocontroller (Berechnungseinheit) 26. Der Speicher könnte jedoch auch extern angeordnet sein und über eine Datenleitung an die Speichereinheit gekoppelt sein.

In der Fig. 1 werden Fördergüter A, B exemplarisch von rechts nach links gefördert, was durch eine Förderrichtung 28 angedeutet ist.

Das Segment N+1 ist voll besetzt, da es bereits zwei Fördergüter A und ein Fördergut B aufgenommen hat. Die Geschwindigkeit v_{N+1} des Segments N+1 ist Null, da stromabwärts, d.h. in einem links gelegenen und nicht dargestellten Bereich der Fig. 1, eine Staubedingung vorliegt, so dass die Artikel des Segments N+1 nicht weiter in der Förderrichtung 28 transportiert werden können. Das Gurtförderersegment N wird mit einer konstanten Geschwindigkeit v_{N} betrieben. Bei der Geschwindigkeit v_{N} handelt es sich um die für diese Förderstrecke eingestellt Transportgeschwindigkeit, die im Wesentlichen konstant ist. Im Nachfolgenden sollen Brems- und Beschleunigungseffekte nicht berücksichtigt werden, die beim Abbremsen oder Beschleunigen der Fördermittel 12 der einzelnen Segmente eigentlich zu berücksichtigen wären. Ein Fachmann wird diese Effekte z.B. in Form von Totzeiten berücksichtigen. Aus Gründen einer einfachen Beschreibung werden diese Effekt jedoch nicht weiter betrachtet.

Das Segment N ist leer, d.h. es befinden sich keine Fördergüter darauf. Das Segment N-1 hingegen fördert gerade ein Fördergut B, und zwar mit der gleichen Geschwindigkeit, mit der auch das Segment N betrieben wird. Hier liegt also die typische Situation vor, dass sich bei dem Segment N+1 ein Stau gebildet hat. Dies bedeutet, dass das einzelne Fördergut B auf dem Segment N angehalten werden muss, um nicht auf die Fördergüter aufzufahren, die sich auf dem Segment N+1 befinden.

Mit Hilfe der Sensoren 10 kann erkannt werden, dass ein Fördergut auf ein zugehöriges Segment eingefahren wird. Bei den Sensoren 10 handelt es sich beispielsweise um ein Lichttasteroder eine Lichtschranke.

Im vorliegenden Fall werden Gurtförderer eingesetzt, so dass die Sensoren 10 immer an einem stromaufwärts gelegenen Ende des Fördermittels 12 angeordnet werden, und zwar außerhalb des Fördermittels. Bei anderen Fördertypen, wie z.B. bei Verwendung von Rollen, könnten die Sensoren selbstverständlich auch innerhalb des Bereichs der Fördermittel 12 angeordnet werden, wie z.B. in einem Luftspalt zwischen zwei Rollen. Der Sensor 10' des Segments N könnte in diesem Fall beispielsweise in den Endbereich des Fördermittels 12" des Segments N-1 verlagert werden, um noch früher erkennen zu können, ob sich ein einfahrendes Fördergut dem interessierenden Segment nähert. Insbesondere bei der Verwendung von Motorrollen sind Trägheitseffekte zu berücksichtigen, die z.B. bei einem abrupten Abbremsen der Rollen bei den Fördergütern auftreten, d.h. die Fördergüter verrutschen auf den Rollen aufgrund ihrer Trägheit.

Es ist klar, dass je nach verwendetem Förderertyp die Position bzw. relative Anordnung der Sensoren 10 eines zugehörigen Segments geändert werden kann bzw. muss.

In der Regel ist das Fördermittel 12 mit einer, vorzugsweise einer einzigen, Antriebseinheit verbunden. Sollte als Fördermittel ein Gurtband verwendet werden, so wird ein bzw. werden beide Umlenkrollen angetrieben. Sollte als Fördermittel ein riemenangetriebenes Rollensegment verwendet werden, so wird eine Rolle angetrieben, die wiederum die anderen Losrollen mittels des Riemens antreibt. Die Rollen werden dann im Verbund angetrieben. Das Fördermittel der vorliegenden Erfindung wird vorzugsweise als Ganzes bewegt. Ein Fördersegment, das in weitere Untersegmente unterteilbar ist, die dann wiederum jeweils getrennt ansteuerbar sind, ist nicht Teil der Erfindung. Exemplarisch sei in diesem Zusammenhang eine Staustrecke genannt, die aus einer Vielzahl individuell ansteuerbaren Motorrollen besteht, wie sie exemplarisch in JP 07-206 132 AA offenbart ist.

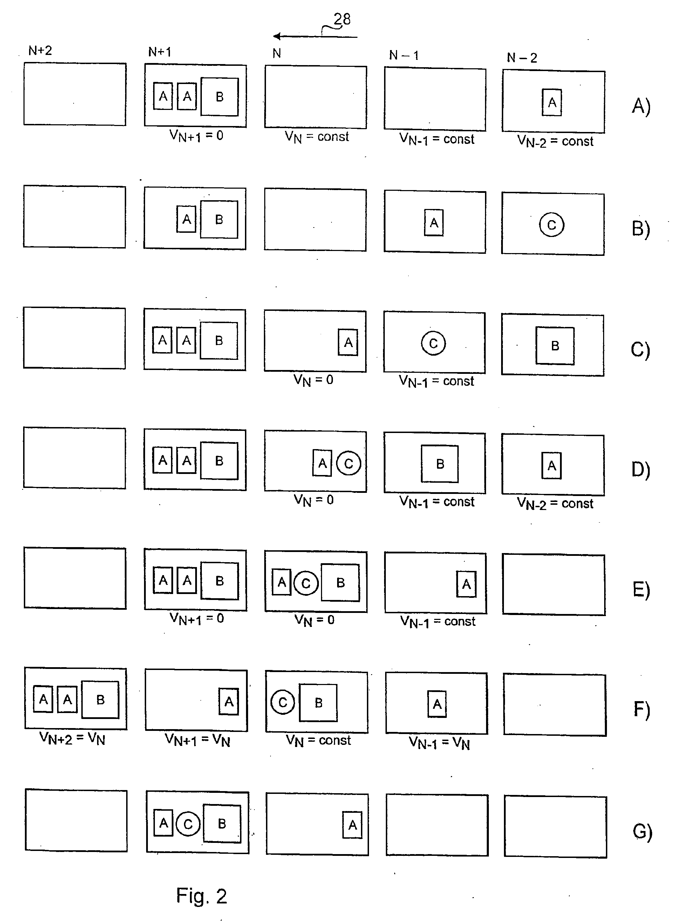

Bezugnehmend auf Fig. 2A bis 2G wird nun die zeitliche Abfolge eines Stauvorgangs beschrieben werden, wobei die Fig. 2A bis 2G zeitlich aufeinanderfolgende Zustände darstellen.

Exemplarisch sind hier fünf Segmente N+2, N+1, N, N-1 und N-2 schematisch gezeigt. Alle Segmente weisen vorzugsweise die gleiche Länge in Förderrichtung 28 auf und sind in Form von Rechtecken dargestellt. Untereinander dargestellte Rechtecke stellen in der Fig. 2 immer das ein und dasselbe Segment dar. Die Sensoren 10 zwischen den einzelnen Segmenten sind aus Vereinfachungsgründen nicht dargestellt. Gleiches gilt für die Steuereinheit (20, 22).

In Fig. 2A ist ein Zustand gezeigt, bei dem das Segment N+1 mit zwei Fördergütern A und einem Fördergut B vollständig belegt ist. Aus einem bestimmten Grund können diese Fördergüter des Segments N+1 nicht weiter transportiert werden, da beispielsweise stromabwärts ebenfalls eine Staubedingung vorliegt. Deshalb ist die Geschwindigkeit v_{N+1} = 0.

Drei Segmente weiter stromaufwärts, d.h. beim Segment N-2, wird ein einzelnes Fördergut A in Richtung des Staus bei dem Segment N+1 transportiert.

Bezugnehmend auf Fig. 2B ist das Fördergut A des Elements N-2 (der Fig. 2A) bereits um ein Segment weiter stromabwärts transportiert worden. Das Fördergut A befindet sich somit auf dem Segment N-1. Dem Fördergut A folgt auf dem Segment N-2 ein Fördergut C nach.

In Fig. 2C ist die Situation gezeigt, dass das Fördergut A an das Segment N abgegeben wurde. Die Geschwindigkeit v_{N} des Segments N beträgt null, da der (hier nicht dargestellte) Sensor des Segments N ein Signal ausgegeben hat, das anzeigt, dass das Fördergut A nun vollständig auf den Gurt des Segments N eingefahren wurde. Wird z.B. eine Lichtschranke verwendet, so wird der Lichtstrahl beim Einfahren unterbrochen. Sobald das Fördergut vollständig auf das Segment N eingefahren wurde, "sieht" die Lichtschranke den Strahl wieder, was die (hier ebenfalls nicht dargestellte) Steuerung des Segments N dazu veranlasst, den Gurt des Segments N anzuhalten.

Das Fördergut C hat sich in der Zwischenzeit auf das Segment N-1 bewegt. Dem Fördergut C folgt im Abstand eines Segments ein Fördergut B nach. Das Fördergut B ist in der Fig. 2C auf dem Segment N-2 gezeigt.

In Fig. 2D ist die Situation gezeigt, bei der auch das Fördergut C auf das Segment N gefahren wurde. Der Sensor des Segments N registriert wiederum die Einfahrt des Förderguts C. Mit dem Sensor des Segments N-1 konnte z.B. bereits vorab die Länge des Förderguts C bestimmt werden, indem die zeitliche Dauer der Unterbrechung gemessen wurde und ausgehend von der konstanten Transportgeschwindigkeit auf die Länge zurückgerechnet wurde.

In dem Moment, wenn das Fördergut C die Lichtschranke des Segments N unterbricht, wird der Gurt des Segments N wiederum mit der konstanten Transportgeschwindigkeit solange bewegt, bis das Fördergut C vollständig auf dem Segment N abgestellt ist. Danach wird die Geschwindigkeit wiederum auf Null reduziert.

In der Fig. 2D ist das dem Fördergut C nachfolgende Fördergut B bereits auf das Segment N-1 gewandert. Diesem Fördergut B folgt nun wiederum ein Fördergut A nach, das auf dem Segment N-2 steht.

In Fig. 2E ist die Situation dargestellt, wenn auch das Fördergut B auf das Segment eingefahren wird. Da die Steuerung des Segments N die Länge des Segments und die Summe aller Längen der Fördergüter A, C und B kennt, kann sie bestimmen, dass keine weiteren Fördergüter aufgenommen werden können. Der Steuerung des Segments N-2 kann nunmehr angezeigt werden, dass auch ein Stau bei dem Segment N vorliegt, so dass das Segment N-1 nun ebenfalls anfängt, Fördergüter zu stauen.

In Fig. 2F ist die Situation gezeigt, bei der das Segment N+1 ein Freigabesignal erhalten hat, das anzeigt, dass die auf dem Segment N+1 gestoppten Fördergüter nun weitertransportiert werden können. Mit geringer zeitlicher Verzögerung können dann auch die Fördergüter A, C und B des Segments N weiter transportiert werden. Dies ist in Fig. 2F dadurch angedeutet, dass bereits das Fördergut A dieser Gruppe auf das Segment N+1 transportiert wurde, dicht gefolgt von den Fördergütern C und B, die sich noch auf dem Segment N befinden.

Auch das Fördergut A des Segments N-1 wird bewegt und zwar gleichzeitig beginnend mit der Gruppe des stromabwärts gelegenen Segments. Dies wird auch als Blockabzug bezeichnet.

Man erkennt den Blockabzug gut in Fig. 2G, wo die beiden Gruppen den gleichen Abstand zueinander aufweisen wie in der Fig. 2E.

Es versteht sich, dass bei der vorliegenden Erfindung die Fördergüter nicht zwingend immer gleich relativ zur Förderstrecke orientiert sein müssen. Kommt es zu einer Verdrehung - und somit einer Vergrößerung der effektiven Länge der Förderrichtung 28 -, so kann dies ohne weiteres von der Steuerung berücksichtigt werden, wenn die Länge mit Hilfe der Sensoren bestimmt wird. Ferner kann man die Abmessungen der Fördergüter bereits vorab in den Speichereinheiten hinterlegen. Von besonderem Interesse kann dabei eine maximale Länge eines Förderguts sein.

In Kenntnis der maximalen Länge kann die Steuereinheit beurteilen, ob der freie, auf dem Segment noch zur Verfügung stehende Platz ausreicht, um selbst das längste Fördergut noch aufnehmen zu können. Ergibt eine dementsprechende Überprüfung, dass der freie Platz nicht ausreicht, um noch das längste Fördergut aufnehmen zu können, so könnte die Steuereinheit entscheiden, dass keine weiteren Fördergüter mehr auf diesem Segment gestaut werden können und dass das nächste, stromaufwärts gelegene Segment zum Stauen benutzt werden muss. In diesem Falle ist es nicht erforderlich, dass Informationen von einem weiteren, weit entfernt stromaufwärts gelegenen Sensor an die Steuereinheit des stromabwärts gelegenen Stausegments geliefert wird. Die Entscheidung, ob weiteres Fördergut aufgenommen wird, hängt nunmehr alleine davon ab, ob das größte, bzw. längste Fördergut noch aufgenommen werden kann.

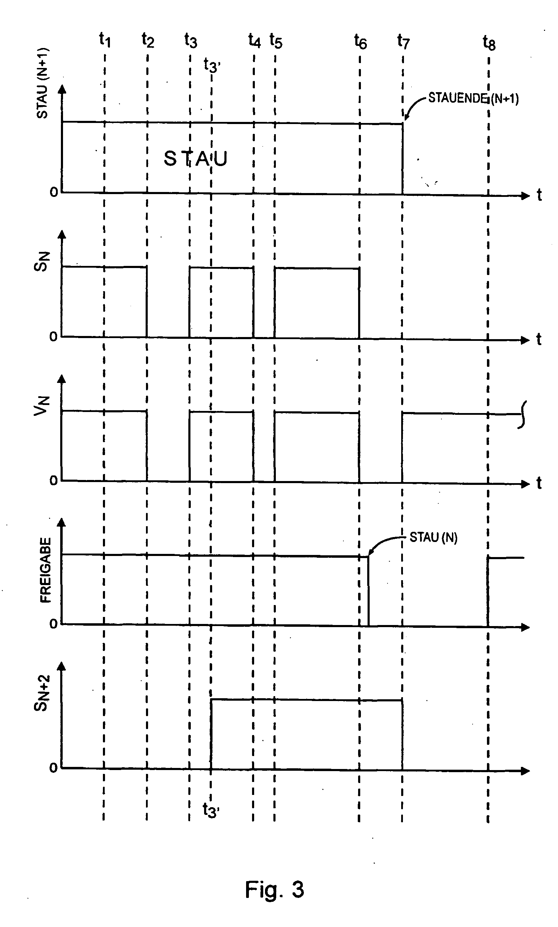

Fig. 3 zeigt mehrere Signalzeitdiagramme übereinander abgebildet.

Im obersten Diagramm ist ein Logiksignal dargestellt, welches eine Staubedingung eines, vorzugsweise nächsten, stromabwärts gelegenen Segments anzeigt. Es wird hier insofern auf Fig. 2 Bezug genommen, bei der das Segment N+1 ebenfalls einen Stau hatte, wobei das Segment N das interessierende Segment ist.

Das zweite Diagramm zeigt das Signal des Sensors des Segments N, wobei das Signal einen Maximalwert hat, wenn der entsprechende Sensor von einem Fördergut passiert wird.

Das dritte Diagramm zeigt die Geschwindigkeit, mit der das Fördermittel des Segments N bewegt wird.

Das vierte Diagramm zeigt das für das Segment N relevante Freigabesignal, wobei beim Segment N ein Stau vorliegt, wenn das Signal eine Intensität von Null hat.

Das fünfte Diagramm zeigt das Signal des Sensors des Segments N+1.

Nachfolgend wird der Stauvorgang der Gruppe von Fördergütern A, C und B auf dem Segment N (vergleiche Fig. 2A-2G) nochmals beschrieben werden. Zu einem Zeitpunkt t₁ registriert der Sensor des Segments N, dass ein Fördergut auf das Segment N eingefahren wird. Die Transportgeschwindigkeit des Segments N wird beibehalten. Es liegt kein Stau beim Segment N vor, so dass das Freigabesignal positiv ist. Der Stau beim Segment N+1 hat sich noch nicht aufgelöst, d.h. die Fördergüter auf dem Segment N+1 haben den Sensor des Segments N+2 noch nicht passiert. Es muss beim Segment N gestaut werden.

Zu einem Zeitpunkt t₂ ist das Fördergut A vollständig auf das Segment N transportiert worden (vergleiche Fig. 2C). Die Zeitdauer t₂-t₁ entspricht dabei der Länge des Förderguts A in Förderrichtung 28.

Die Geschwindigkeit des Segments N wird nun auf Null reduziert, da das stromabwärts gelegene Segment N+1 weiterhin die Bedingung Stau signalisiert.

Noch ist ausreichend Platz auf dem Segment N, so dass das Freigabesignal weiterhin positiv ist.

Zum Zeitpunkt t₃ fährt nun das Fördergut C auf das Segment N ein, d.h. der Sensor des Segments N liefert ein Signal.

Deshalb wird die Transportgeschwindigkeit des Segments N wieder auf v_{N} gesteigert (hier idealisiert in Form eines rechtwinkligen Flankenanstiegs dargestellt).

Zum Zeitpunkt t₄ hat das Fördergut C den Sensor des Segments N passiert. Das Fördergut C befindet sich somit vollständig auf dem Segment N (vergleiche Fig. 2D). Die Geschwindigkeit des Segments N wird deshalb wieder auf Null reduziert. Jedoch ist weiterhin noch ausreichend Platz, um weitere Fördergüter aufzunehmen, weshalb das Freigabesignal weiterhin positiv ist.

Zum Zeitpunkt t₅ fährt nun das Fördergut B ein. Zum Zeitpunkt t₆ ist das Fördergut B vollständig auf das Segment N eingefahren (vergleiche Fig. 2E).

Mit einer kurzen Verzögerung, die durch eine Berechnungszeit bedingt ist, wird nun auf den Zustand Stau beim Segment N umgeschaltet, indem die Signalstärke des Freigabesignals auf Null abfällt.

Abweichend von der Abfolge der Fig. 2A bis 2G wäre es nun möglich, dass sich der Stau zum Zeitpunkt t_{3'} beginnt, bei dem Segment N+1 aufzulösen. Deshalb registriert der Sensor des Segments N+2 den Abzug der Gruppe von Fördergütern, die sich zuvor auf dem Segment N+1 befand. Dieser Abzug dauert bspw. bis zum Zeitpunkt t₇. Nachdem der Abzug abgeschlossen ist, fällt das Logiksignal des Segments N+1 auf Null ab, das im ersten Diagramm der Fig. 3 dargestellt ist. Dies bedeutet wiederum für das Segment N, dass dieses nun ebenfalls mit dem Abtransport der auf ihm gestauten Fördergüter beginnen kann, weshalb die Geschwindigkeit v_{N} wieder auf ihren Normalwert gesteigert wird.

Alternativ könnte auch ein so genannter "Blockabzug" durchgeführt werden. Dabei ist es erforderlich , dass der Abzugsvorgang bei dem vorhergehenden Segment vollständig abgeschlossen ist. Es kann auch nach dem Start des Segments N+1 sofort das Segment N mit dem Abzug starten.

Zum Zeitpunkt t₈ sind alle Fördergüter von dem Segment N abtransportiert, was beispielsweise durch das Signal des Sensors des Segments N+1 überwacht werden kann, weshalb das Freigabesignal des Segments N wieder auf seinen positiven Wert springt. Das Segment N ist nun wiederum in der Lage erneut als Stausegment verwendet zu werden.

Es versteht sich, dass verschiedenste Arten des Abzugs bzw. der Stauauflösung implementiert werden können. Ferner versteht es sich, dass Totzeiten zu berücksichtigen sind und dass die hier dargestellten Anstiegsflanken idealisiert sind.

## Patentansprüche

1. Stauförderstrecke (100) mit einer Vielzahl von aneinandergereihten Förderstreckensegmenten, wobei jedes Förderstreckensegment (N+1; N; N-1) aufweist:
eine vorbestimmte Länge zum Stauen von mehreren Fördergütern
ein Fördermittel (12) zum Bewegen der Fördergüter (A, B, C) darauf mit einer im Wesentlichen konstanten Geschwindigkeit in einer Förderrichtung (28), die parallel zu einer Längsrichtung des Segments (N) orientiert ist, entlang des jeweiligen Segments (N), wobei das Fördermittel (12) angetrieben ist, um das jeweilige Segment mit der im Wesentlichen konstanten Geschwindigkeit (vₙ) zu bewegen; und
einen Sensor (10; 10'; 10"; 10"'), um zu erfassen, dass ein Fördergut (A, B, C) auf das jeweilige Segment (N-1; N; N+1) einfährt;
und mit einer Steuereinheit (22), die an die Sensoren (10) gekoppelt ist, um in Abhängigkeit von einem Erfassungssignal eines der Sensoren (10) ein stromabwärts zu dem einen Sensor (10) angeordnetes Fördermittel (12) zu bewegen und zu stoppen, und die angepasst ist, vorab eine geometrische Länge eines einfahrenden Förderguts (A, B, C) in der Förderrichtung (28) zu bestimmen und, in Abhängigkeit von der bestimmten geometrischen Länge, das stromabwärts gelegene Fördermittel (28) nicht weiter zu bewegen, wenn ein noch zur Verfügung stehender Platz auf dem stromabwärts gelegenen Fördermittel nicht mehr ausreicht, um das einfahrende Fördergut (A, B, C) aufnehmen zu können.

2. Stauförderstrecke nach Anspruch 1, wobei das Fördermittel (12) ein Gurt oder ein riemenangetriebenes Rollensegment ist.

3. Stauförderstrecke nach Anspruch 1 oder 2, wobei das Segment nur eine Antriebstechnik aufweist.

4. Stauförderstrecke nach Anspruch 1, wobei das stromabwärts gelegene Fördermittel keine weiteren Fördergüter (A, B, C) mehr aufnehmen kann, wenn der auf dem Fördermittel (12) noch zur Verfügung stehender Platz kleiner als eine maximale Fördergutlänge ist.

5. Stauförderstrecke nach Anspruch 1 oder 4, wobei die Steuereinheit (20) eine Speichereinheit (24) umfasst ist, in der die Bewegungsgeschwindigkeit (v_{N}) des Fördermittels (12) und die Länge des Segments (N) hinterlegt sind.

6. Stauförderstrecke nach Anspruch 5, wobei in der Speichereinheit (24) ferner eine maximale Fördergutlänge hinterlegt ist.

7. Stauförderstrecke nach einem der vorhergehenden Ansprüche, wobei unterschiedliche Typen von Fördergüter (A, B, C) mit unterschiedlichen Abmessungen gestaut werden können.

8. Stauförderstrecke nach Anspruch 5 und 7, wobei die unterschiedlichen Abmessungen (A, B, C) in der Speichereinheit (24) hinterlegt sind.

9. Stauförderstrecke nach einem der vorhergehenden Ansprüche, wobei die Bestimmung der geometrischen Länge in Abhängigkeit von einer zeitlichen Dauer des Erfassungssignals (s_{N}) erfolgt.

10. Stauförderstrecke nach einem der vorhergehenden Ansprüche, wobei jeder Sensor (10) in einem Bereich eines stromaufwärts gelegenen Endes des zugehörigen Fördermittels (12) angeordnet ist.

11. Stauförderstrecke nach Anspruch 10, wobei jeder Sensor (10) von außen, vorzugsweise unmittelbar, an das stromaufwärts gelegene Ende des zugehörigen Segments (N) angrenzt.

12. Stauförderstrecke nach einem der vorhergehenden Ansprüche, wobei die Steuereinheit (20) eine Berechungseinheit (26) umfasst, die die Längen aller auf das Segment (N) bereits eingefahrenen Fördergüter (A, B, C) und einen vorbestimmten Mindestabstand aufsummiert, um zu bestimmen, ob das Segment (N) weitere Fördergüter (A, B, C) aufnehmen kann.

13. Verfahren zum Betreiben einer Förderstrecke (100) in einem Staumodus, wobei die Förderstrecke (100) mehrere aneinandergereihte Förderstreckensegmente (N-1; N; N+1), insbesondere Segmente nach einem der Ansprüche 1 bis 11, aufweist, denen jeweils ein Sensor (10; 10'; 10") zugeordnet ist, und wobei Fördergüter (A, B, C) in einem Normalmodus auf einem Fördermittel (12; 12'; 12") jedes Segments (N) in einer Förderrichtung (28) parallel zur Längsrichtung des jeweiligen Segments (N-1; N; N+1) mit einer im Wesentlichen konstanten Geschwindigkeit (v_{N}) transportiert werden, mit den Schritten:
falls in einem relativ zu einem ersten Segment (N) stromabwärts gelegenen zweiten Segment (N+1) eine Staubedingung vorliegt, Einfahren von mindestens einem Fördergut (A, B, C) auf das erste Segments (N), indem dessen Fördermittel solange bewegt wird, bis das Fördergut vollständig auf dem ersten Segment ist, danach wird die Geschwindigkeit auf Null reduziert;
Bestimmen einer geometrischen Länge des eingefahrenen Förderguts (A, B, C) und eines als nächstes, auf das erste Segment (N) einzufahrenden Förderguts in der Förderrichtung (28); und
Entscheiden, ob das erste Segment (N) das nächste einzufahrende Fördergüter (A, B, C) noch aufnehmen kann, indem ein auf dem Fördermittel (12) des ersten Segments (N) noch zur Verfügung stehender Platz mittels Differenzbildung zwischen einer Länge des ersten Segments (N) und einer Summe von Längen solcher Fördergüter (A, B, C) berechnet wird, die sich schon auf dem ersten Segment (N) befinden.

14. Verfahren nach Anspruch 14, wobei beim Entscheiden berücksichtigt wird, welche Länge das erste Segment (N) selbst in der Förderrichtung (28) aufweist und mit welcher Geschwindigkeit (v_{N}) die Fördermittel (12) des ersten Segments (N) bewegt werden.

## Claims

1. An accumulation conveyor line (100) having a plurality of conveyor line segments adjacent to each other, each conveyor line segment (N+1; N; N-1) comprising:
a predetermined length for accumulating several conveyed goods,
conveying means (12) for moving the conveyed goods (A, B, C) thereon at a substantially constant speed along a conveying direction (28), which is oriented parallel to a longitudinal direction of the segment (N), along the respective segment (N), wherein the conveying means (12) is driven for moving the respective segment with the substantially constant speed (v_{N}); and
a sensor (10; 10'; 10", 10"') for detecting conveyed good (A, B, C) being fed to the respective segment (N-1; N; N+1);
and a controlling unit (20; 22) coupled to the sensors (10) in order to move and stop the conveying means (12) being arranged downstream relative to the sensors (10), dependent on the detection signal of one of the sensors (10), and adapted to determine a geometrical length of an incoming conveyed good (A, B, C) along the conveying direction (28), and to not move the conveying means (28) further, dependent on the determined length(s), if space, which is still available, on the downstream conveying means is not sufficient for receiving the incoming good (A, B, C).

2. The accumulation conveyor line of claim 1, wherein the conveying means (12) is a belt or belt driven roller segment.

3. The accumulation conveyor line of claim 1 or 2, wherein the segment comprising merely one drive.

4. The accumulation conveyor line of claim 1, wherein the downstream conveying means can take no more additional conveyed goods (A, B, C), if a space on the conveying means (12) being still available is smaller than a maximum length of a conveyed good.

5. The accumulation conveyor line of claim 1 or 4, wherein the controlling unit (20) comprises a memory unit (24) in which the movement speed (v_{N}) of the conveying means (12) and the length of the segment (N) is deposited.

6. The accumulation conveyor line of claim 5, wherein a maximum length of conveyed goods is deposited in the memory unit (24).

7. The accumulation conveyor line of any of the preceding claims, wherein different types of conveyed accumulation conveyor line (A, B, C) having different dimensions can be accumulated.

8. The accumulation conveyor line of claims 5 and 7, wherein the different dimensions (A, B, C) are deposited in the memory unit (24).

9. The accumulation conveyor line of any of the preceding claims, wherein the geometrical length is determined dependent on a temporal duration of the detection signal (s_{N}).

10. The accumulation conveyor line of any of the preceding claims, wherein each of the sensors (10) is arranged in an area at an upstream end of the conveying means (12).

11. The accumulation conveyor line of claim 10, wherein each of the sensors (10) externally adjoins the upstream end of the segment (N), preferably directly.

12. The accumulation conveyor line of any of the preceding claims, wherein the controlling unit (20) comprises a calculation unit (26) which sums the lengths of all conveyed goods (A, B, C) already fed to the segment (N) and a predetermined minimum distance is summed up, in order to determine whether the segment (N) can receive additional conveyed goods (A, B, C).

13. A method for operating a conveyor line (100) in an accumulation mode, wherein the conveyor line (100) comprises several adjacent conveyer line segments (N-1; N; N+1), particularly segments of one of the claims 1 to 11, each of which is assigned to a sensor (10; 10', 10"), and wherein conveyed goods (A, B, C) are transported in a normal mode on a conveying means (12; 12'; 12") of each segment (N) along a conveying direction (28) parallel to a longitudinal direction of each segment (N-1; N; N+1) at a substantially constant speed (v_{N}), comprising the steps:
if a traffic jam condition is present at a second segment (N+1) located downstream relative to a first segment (N), feeding at least one conveyed good (A, B, C) to the first segment (N) by moving the conveying means thereof as long as the conveyed good is completely on the first segment, and then the velocity is reduced to zero;
determining a geometrical length of the fed conveyed good (A, B, C) and of a next conveyed good which is to be fed to the first segment (N) along the conveying direction (28); and
judging whether the first segment (N) can receive the next to-be-fed conveyed good (A, B, C) by calculating a space which is still available on the first segment (N) by means of difference generation between a length of the first segment (N) and a sum of lengths of such conveyed goods (A, B, C) being already present on the first segment (N).

14. The method of claim 13, wherein it is to be taken into account during judging which length the first segment (N) has along the conveying direction (28) and at which speed (v_{N}) the conveying means (12) of the first segment (N) is moved.

## Revendications

1. Section de convoyage à accumulation (100) comprenant une pluralité de segments de section de convoyage alignés bout à bout, chaque segment de section de convoyage (N+1 ; N; N-1) présentant : une longueur prédéfinie pour accumuler plusieurs marchandises à convoyer; des moyens de convoyage (12) pour déplacer les marchandises à convoyer (A, B, C) sur celui-ci à une vitesse sensiblement constante, dans un sens de convoyage (28) qui est orienté parallèlement à un sens longitudinal du segment (N), le long du segment (N) correspondant, les moyens de convoyage (12) étant entraînés pour déplacer le segment correspondant à la vitesse sensiblement constante (vₙ) ; et un capteur (10 ; 10' ; 10" ; 10"') pour détecter le fait qu'une marchandise à convoyer (A, B, C) pénètre sur le segment (N+1 ; N; N-1) correspondant; et comprenant une unité de commande (22) qui est connectée aux capteurs (10) pour mettre en mouvement et pour arrêter des moyens de convoyage (12) disposés en aval de l'un des capteurs (10) en fonction d'un signal de détection dudit capteur (10) et qui est adaptée pour déterminer à l'avance, dans le sens du convoyage (28), une longueur géométrique d'une marchandise à convoyer (A, B, C) en train de pénétrer et, en fonction de la longueur géométrique déterminée, ne pas poursuivre le mouvement des moyens de convoyage (12) se trouvant en aval lorsqu'un espace encore disponible sur les moyens de convoyage se trouvant en aval n'est plus suffisant pour pouvoir accueillir la marchandise à convoyer (A, B, C) en train de pénétrer.

2. Section de convoyage à accumulation selon la revendication 1, les moyens de convoyage (12) étant une bande ou un segment à rouleaux à entraînement par courroie.

3. Section de convoyage à accumulation selon la revendication 1 ou 2, le segment ne présentant qu'une seule technique d'entraînement.

4. Section de convoyage à accumulation selon la revendication 1, les moyens de convoyage se trouvant en aval ne pouvant plus accueillir de marchandises à convoyer (A, B, C) supplémentaires lorsque l'espace encore disponible sur les moyens de convoyage (12) est plus petit qu'une longueur maximale de marchandise à convoyer.

5. Section de convoyage à accumulation selon la revendication 1 ou 4, l'unité de commande (20) comprenant une unité à mémoire (24) dans laquelle sont stockées la vitesse de déplacement (v_{N}) des moyens de convoyage (12) et la longueur du segment (N).

6. Section de convoyage à accumulation selon la revendication 5, une longueur maximale de marchandise à convoyer étant en outre stockée dans l'unité à mémoire (24).

7. Section de convoyage à accumulation selon l'une des revendications précédentes, différents types de marchandises à convoyer (A, B, C) ayant des dimensions différentes pouvant être accumulés.

8. Section de convoyage à accumulation selon les revendications 5 et 7, les différentes dimensions (A, B, C) étant stockées dans l'unité à mémoire (24).

9. Section de convoyage à accumulation selon l'une des revendications précédentes, la détermination de la longueur géométrique étant effectuée en fonction d'une durée dans le temps du signal de détection (s_{N}).

10. Section de convoyage à accumulation selon l'une des revendications précédentes, chaque capteur (10) étant disposé dans une zone d'une extrémité se trouvant en amont des moyens de convoyage (12) associés.

11. Section de convoyage à accumulation selon la revendication 10, chaque capteur (10) étant limitrophe depuis l'extérieur, de préférence directement, de l'extrémité se trouvant en amont du segment (N) associé.

12. Section de convoyage à accumulation selon l'une des revendications précédentes, l'unité de commande (20) comprenant une unité de calcul (26) qui additionne les longueurs de toutes les marchandises à convoyer (A, B, C) qui ont déjà pénétré sur le segment (N) et un écart minimum prédéfini afin de déterminer si le segment (N) peut accueillir des marchandises à convoyer (A, B, C) supplémentaires.

13. Procédé pour faire fonctionner une section de convoyage (100) dans un mode d'accumulation, la section de convoyage (100) comprenant une pluralité de segments de section de convoyage (N+1 ; N ; N-1) alignés bout à bout, notamment des segments selon l'une des revendications 1 à 11, auxquels est respectivement associé un capteur (10 ; 10' ; 10"), et des marchandises à convoyer (A, B, C) étant transportées dans un mode normal sur des moyens de convoyage (12 ; 12' ; 12") de chaque segment (N) dans un sens de convoyage (28) parallèle au sens longitudinal du segment correspondant (N+1 ; N ; N-1) et à une vitesse sensiblement constante (vₙ), comprenant les étapes suivantes :
s'il existe une condition d'accumulation dans un deuxième segment (N+1) qui se trouve en aval par rapport à un premier segment (N), pénétration d'au moins une marchandise à convoyer (A, B, C) sur le premier segment (N) par la mise en mouvement de ses moyens de convoyage jusqu'à ce que la marchandise à convoyer soit entièrement sur le premier segment, après quoi la vitesse est réduite à zéro ; détermination d'une longueur géométrique de la marchandise à convoyer (A, B, C) ayant pénétré et d'une marchandise à convoyer suivante à faire pénétrer sur le premier segment (N) dans le sens du convoyage (28) ; et décision si le premier segment (N) peut encore accueillir les prochaines marchandises à convoyer (A, B, C) à faire pénétrer en calculant un espace encore disponible sur les moyens de convoyage (12) du premier segment (N) par un calcul de la différence entre une longueur du premier segment (N) et une somme des longueurs des marchandises à convoyer (A, B, C) qui se trouvent déjà sur le premier segment (N).

14. Procédé selon la revendication 13, la décision prenant en considération la longueur que présente le premier segment (N) lui-même dans le sens du convoyage (28) et la vitesse (v_{N}) à laquelle les moyens de convoyage (12) du premier segment (N) se déplacent.
